# DEMANDE DE BREVET EUROPEEN

(11) **EP 4 549 303 A1**
(43) Date de publication de la demande: **07.05.2025**
(21) Numéro de dépôt: 24209638.6
(22) Date de dépôt: 29.10.2024
(51) Int. Cl.: B62M 9/16

(54) **TENDEUR DE CHAÎNE POUR VÉLO, KIT ET VÉLO COMPORTANT UN TEL TENDEUR**

(30) Priorité: 30.10.2023 FR 2311796; 23.11.2023 FR 2312952
(71) Demandeur: Brunault R&D, 30132 Caissargues (FR)
(72) Inventeur: BRUNAULT, Hugues, 30132 Caissargues (FR)
(74) Mandataire: Cornuejols, Marine Sophie

(57) **Abrégé**

Le tendeur (100) de chaîne pour vélo, le vélo comportant un cadre, un pignon et une couronne, une chaîne (150) transmettant la force en rotation exercée sur la couronne au moyen du pédalier au pignon (105), comporte :
- une première roue dentée (125) dite « de guidage », montée en roue libre par rapport au support (115), entraînée en rotation par la chaîne (115) autour d'un premier axe (130) parallèle aux axes de rotation (110) de la couronne et du pignon (105),
- un support (115) de fixation au cadre (305), qui comporte un moyen de réglage (165) de la position du premier axe (130) configuré pour que la position du premier axe (130) soit telle que le cercle de tête de la première roue dentée soit tangent au cercle de tête du pignon.

## Description

### DOMAINE TECHNIQUE DE L'INVENTION

La présente invention vise un tendeur de chaîne pour vélo, un kit comportant un tel tendeur et un vélo comportant un tel kit. Elle s'applique notamment au domaine des véhicules à deux roues motorisées ou non, ou des vélos dits « cargo » ou encore des triporteurs. Elle s'applique, plus particulièrement, au domaine des sports extrêmes de vélo.

### ÉTAT DE LA TECHNIQUE

Les approches décrites dans cette section sont des approches qui pourraient être poursuivies, mais pas nécessairement des approches qui ont été conçues ou poursuivies précédemment. Par conséquent, sauf indication contraire, il convient de ne pas supposer que l'une ou l'autre des approches décrites dans cette section constitue un art antérieur du seul fait de son inclusion dans cette section.

Dans le domaine des véhicules à deux roues non motorisées, des problèmes liés à l'usure des pièces mécaniques surviennent avec le temps. Notamment, le mécanisme des roues dentées et de la chaîne d'un vélo est affecté par des détériorations liées à un usage prolongé.

Particulièrement, la chaîne du vélo s'agrandit, entraînant une perte de tension de la chaîne entre la couronne et le pignon. Cette perte de tension se traduit par une perte de transmission de puissance et donc une vitesse plus faible pour un effort égal du cycliste. Plus la chaîne est détendue, plus le rapport de transmission est faible. Cela entraîne une diminution de l'efficacité mécanique du système. Au démarrage, l'utilisateur met plus de temps à acquérir de la vitesse lorsqu'il commence à pédaler.

Dans le domaine des sports extrêmes, la perte de tension de la chaîne du vélo entraînant un démarrage moins rapide fait perdre du temps à l'utilisateur dès le début de la course.

On connaît des tendeurs de chaîne se fixant sur le cadre à proximité du pignon, comportant une roue dentée et un ressort. La roue dentée exerce une pression sur la chaîne par l'action du ressort pour ramener la chaîne contre le pignon. Le ressort exerce une force importante dont la direction est opposée au sens de rotation de la chaîne. De tels tendeurs exercent une force importante de pression sur la chaîne que l'utilisateur doit contrer lorsqu'il commence à pédaler. L'utilisateur doit alors exercer plus de force lors du démarrage, ce qui augmente son temps de démarrage.

### RÉSUMÉ DE L'INVENTION

Le concept général de l'invention consiste à mettre en oeuvre des roues dentées, en contact avec une chaîne de vélo, apportant une meilleure tension à la chaîne. La force de pression est créée par un système pivotant en roue libre comprenant une butée mécanique, rapprochant ainsi les deux roues dentées du tendeur. La force contraignante sur la chaîne est alors réduite. Ainsi, le tendeur optimise le couple transmis au pignon tout en permettant d'obtenir un meilleur rendement mécanique.

En particulier, dans le domaine des sports extrêmes, le tendeur de chaîne de la présente invention permet un gain de vitesse sur les premiers mètres de quelques secondes.

### BRÈVE DESCRIPTION DES FIGURES

D'autres avantages, buts et caractéristiques particulières de l'invention ressortiront de la description non limitative qui suit d'au moins un mode de réalisation particulier du tendeur de chaîne pour vélo, du kit et du vélo objet de la présente invention, en regard des dessins annexés, dans lesquels :
La figure 1 représente, schématiquement et en vue arrière, un mode de réalisation du tendeur de chaîne pour vélo objet de la présente l'invention,
La figure 2 représente, schématiquement et en vue de face, le tendeur de chaîne pour vélo objet de la présente l'invention illustré en figure 1,

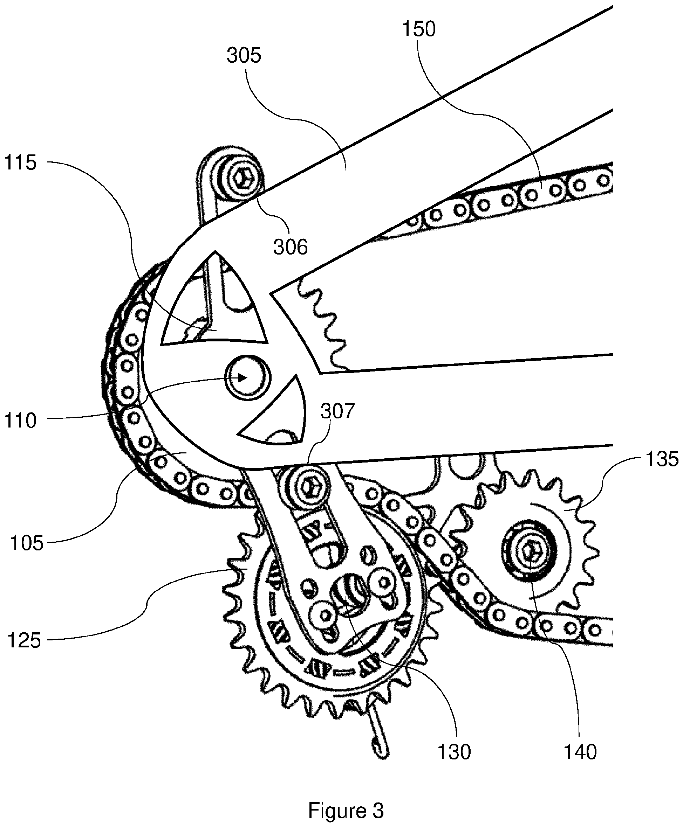

La figure 3 représente, schématiquement et en vue de face, un cadre de vélo et le tendeur de chaîne pour vélo objet de la présente l'invention illustré en figure 1,
La figure 4 représente, schématiquement et en coupe partielle, un pignon, une chaîne et un tendeur de chaîne pour vélo objet de la présente l'invention illustré en figure 1,
La figure 5 représente, schématiquement et en perspective, un mode de réalisation du kit objet de la présente l'invention,
La figure 6 représente, schématiquement et en perspective, un mode de réalisation du vélo objet de la présente l'invention et
La figure 7 représente, schématiquement et en vue éclatée, le tendeur de chaîne pour vélo illustré en figure 1.

### DESCRIPTION DES MODES DE RÉALISATION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

Comme on le comprend à la lecture de la présente description, divers concepts inventifs peuvent être mis en oeuvre par une ou plusieurs méthodes ou dispositifs décrits ci-après, dont plusieurs exemples sont ici fournis. Les actions ou étapes réalisées dans le cadre de la réalisation du procédé ou du dispositif peuvent être ordonnées de toute manière appropriée. En conséquence, il est possible de construire des modes de réalisation dans lesquels les actions ou étapes sont exécutées dans un ordre différent de celui illustré, ce qui peut inclure l'exécution de certains actes simultanément, même s'ils sont présentés comme des actes séquentiels dans les modes de réalisation illustrés.

Les articles indéfinis « un » et « une », tels qu'ils sont utilisés dans la description et dans les revendications, doivent être compris comme signifiant « au moins un », sauf indication claire du contraire.

L'expression « et/ou », telle qu'elle est utilisée dans le présent document et dans les revendications, doit être comprise comme signifiant « l'un ou l'autre ou les deux » des éléments ainsi conjoints, c'est-à-dire des éléments qui sont présents de manière conjonctive dans certains cas et de manière disjonctive dans d'autres cas. Les éléments multiples énumérés avec « et/ou » doivent être interprétés de la même manière, c'est-à-dire « un ou plusieurs » des éléments ainsi conjoints. D'autres éléments peuvent éventuellement être présents, autres que les éléments spécifiquement identifiés par la clause « et/ou », qu'ils soient liés ou non à ces éléments spécifiquement identifiés. Ainsi, à titre d'exemple non limitatif, une référence à « A et/ou B », lorsqu'elle est utilisée conjointement avec un langage ouvert tel que « comprenant » peut se référer, dans un mode de réalisation, à A seulement (incluant éventuellement des éléments autres que B) ; dans un autre mode de réalisation, à B seulement (incluant éventuellement des éléments autres que A) ; dans un autre mode de réalisation encore, à A et B (incluant éventuellement d'autres éléments) ; etc.

Tel qu'utilisé ici dans la description et dans les revendications, « ou » doit être compris de manière inclusive.

Telle qu'elle est utilisée dans la présente description et dans les revendications, l'expression « au moins un », en référence à une liste d'un ou de plusieurs éléments, doit être comprise comme signifiant au moins un élément choisi parmi un ou plusieurs éléments de la liste d'éléments, mais n'incluant pas nécessairement au moins un de chaque élément spécifiquement énuméré dans la liste d'éléments et n'excluant pas toute combinaison d'éléments dans la liste d'éléments. Cette définition permet également la présence facultative d'éléments autres que les éléments spécifiquement identifiés dans la liste des éléments auxquels l'expression « au moins un » fait référence, qu'ils soient liés ou non à ces éléments spécifiquement identifiés. Ainsi, à titre d'exemple non limitatif, « au moins l'un de A et B » (ou, de manière équivalente, « au moins l'un de A ou B », ou, de manière équivalente, « au moins l'un de A et/ou B ») peut se référer, dans un mode de réalisation, à au moins un, incluant éventuellement plus d'un, A, sans B présent (et incluant éventuellement des éléments autres que B) ; dans un autre mode de réalisation, à au moins un, comprenant éventuellement plus d'un, B, sans A présent (et comprenant éventuellement des éléments autres que A) ; dans encore un autre mode de réalisation, à au moins un, comprenant éventuellement plus d'un, A, et au moins un, comprenant éventuellement plus d'un, B (et comprenant éventuellement d'autres éléments) ; etc.

Dans les revendications, ainsi que dans la description ci-dessous, toutes les expressions transitoires telles que « comprenant », « incluant », « portant », « ayant », « contenant », « impliquant », « tenant », « composé de », et autres, doivent être comprises comme étant ouvertes, c'est-à-dire comme signifiant incluant mais non limité à. Seules les expressions transitoires « consistant en » et « consistant essentiellement en » doivent être comprises comme des expressions transitoires fermées ou semi-fermées, respectivement.

Dans toute la description, les termes « supérieur » et « haut » désignent ce qui est en haut lorsque le tendeur est installé sur un vélo. Les termes « inférieur » et « bas » désignent ce qui est en bas lorsque le tendeur est installé sur un vélo. Le terme « vertical » désigne ce qui suit la direction de la pesanteur lorsque le tendeur est installé sur un vélo. Le terme « horizontal » désigne ce qui est perpendiculaire à la direction de la pesanteur lorsque le tendeur est installé sur un vélo.

On appelle « cycle » tout dispositif équipé d'un pédalier définit comme suit : appareil de locomotion muni de roues et mû par l'action des pieds sur des pédales (bicyclette, tandem, tricycle, vélo, vélo cargo etc.)

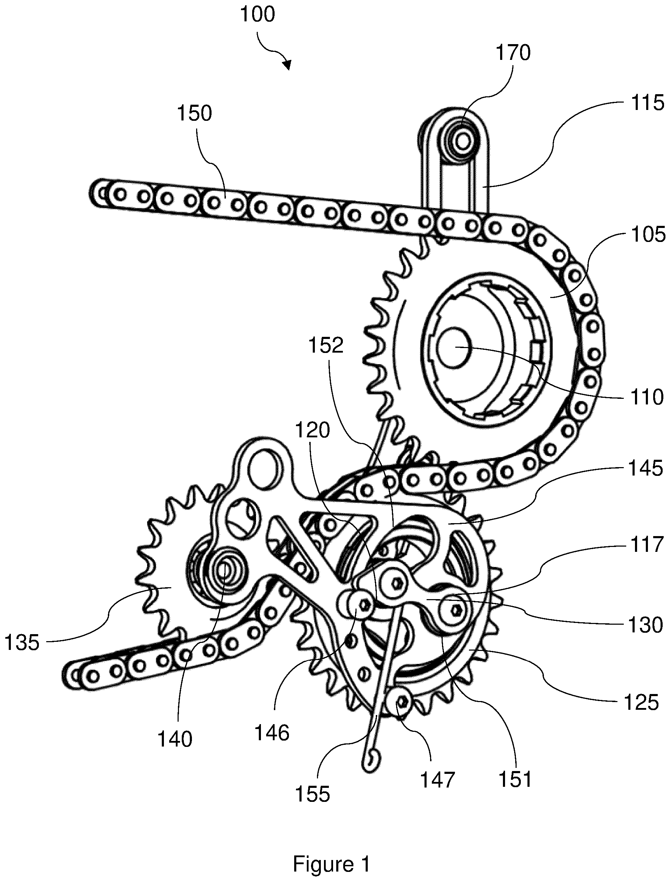

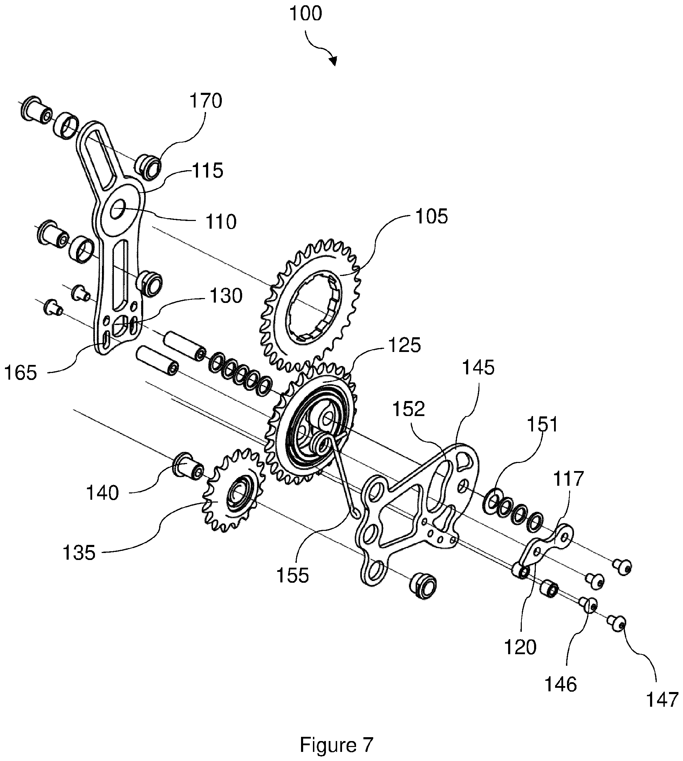

On observe sur les figures 1, 2, 5, 6 et 7 qui sont à l'échelle mais à des échelles différentes, une vue schématique d'un mode de réalisation du tendeur de chaîne pour cycle 100 objet de la présente invention. Le cycle 600 comporte un cadre 305 présentant une couronne 505 fixée à un pédalier 605 et un pignon 105 fixé à une roue 610, la couronne 505 et le pignon 105 présentent des axes de rotation 110, 510 et 515 par rapport au cadre 305 parallèles, la chaîne 150 transmettant la force en rotation exercée sur la couronne 505 au moyen du pédalier 605 au pignon 105. Le tendeur 100 comporte :
- une première roue dentée 125 dite « de guidage », montée en roue libre par rapport à un support 115, entraînée en rotation par la chaîne 150 autour d'un premier axe 130 parallèle aux axes de rotation 110, 510 et 515 de la couronne 505 et du pignon 105
- le support 115 de fixation au cadre 305, qui comporte un moyen de réglage 165 de la position du premier axe 130 configuré pour que la position du premier axe 130 soit telle que le cercle de tête de la première roue dentée 410 soit tangent au cercle de tête du pignon 405.

Dans des modes de réalisation, le support 115 de fixation au cadre comporte une butée 120, et le tendeur 100 comporte, de plus :
- une deuxième roue dentée 135 dite de « mise sous tension », entraînée en rotation par la chaîne 150 autour d'un deuxième axe 140 parallèle au premier axe 130,
- une armature 145 de la deuxième roue dentée 135, la deuxième roue dentée 135 étant montée en roue libre par rapport à l'armature 145, l'armature 145 formant une liaison pivot avec le support 115 d'axe parallèle ou confondu au premier axe 130, la rotation de l'armature 145, sous l'effet d'une tension exercée par la chaîne 150 sur la roue 135 de mise sous tension, par rapport au support 115 étant limité par la butée 120.

Le support 115 de fixation peut être un solide de forme quelconque adapté à la fixation sur un cadre 305 de cycle. Préférentiellement, le support 115 suit deux axes reliés par un angle inférieur à 180°, l'angle correspondant à la position de l'axe 110 de rotation du pignon 105. Préférentiellement, le support 115 est fixé au cadre 305 du cycle indépendamment du pignon. En d'autres termes, le support 115 est fixe alors que le pignon 105 est en liaison pivot avec le cadre 305 selon l'axe 110.

Préférentiellement, le support 115 comporte deux bras, 118 et 119, s'étendant le long des axes.

Dans des modes de réalisation, la dimension de chaque bras, 118 et 119, est différente pour s'adapter au cadre 305 du cycle. Les dimensions du support 115 sont préférentiellement sélectionnées pour s'adapter aux dimensions du cadre 305. Par exemple, la longueur du support 115 est supérieure à la longueur du cadre 305 selon un axe vertical depuis le centre de l'axe 110 du pignon 105.

Par exemple, le support 115 comporte un orifice débouchant permettant le placement du support 115 sur l'axe 110 du pignon 105. Le support 115 peut comporter un moyen de fixation à l'axe 110. Un tel moyen de fixation peut être de tout type connu de l'homme du métier, de type vis-écrou par exemple.

Dans des modes de réalisation, le support 115 comporte, sur au moins un bras, 118 et 119, des moyens d'adaptation à toute forme de cadre 305 de cycle. De tels moyens d'adaptation peuvent comporter, par exemple, au moins un pion 161 configuré pour être mise en contact le cadre du cycle, le support étant maintenu par le moyen de fixation d'une part et chaque pion d'autre part.

Préférentiellement, le support comporte des perçages et/ou des trous oblongs 160 correspondant à différentes positions de chaque pion 161.

Le support 115 peut présenter deux trous oblongs préférentiellement positionnés au-dessus et en dessous de l'axe 110 de rotation du pignon 105 selon les axes définissant chaque bras, 118 et 119. Par exemple, les trous oblongs forment des coulisses de guidage pour coulisseaux, tels que les pions 161, en liaison glissière dans les trous oblongs 160. Les coulisseaux 161 peuvent posséder un moyen de serrage 170 pour bloquer la translation du coulisseau 161 dans la coulisse 160. Par exemple, de tels moyens de serrage 170 sont des systèmes vis-écrou ou des pinces.

Dans d'autres modes de réalisation, le tendeur 100 peut être soudé directement au cadre 305 du cycle, la fixation du support 115 étant alors formée de la soudure entre les deux éléments.

Le support 115 de fixation peut être composé d'un matériau rigide tel un matériau renforcé en fibres de carbone, un matériau composite ou un alliage métallique, par exemple de l'acier, de l'acier inoxydable ou de l'aluminium.

Le support 115 de fixation est une pièce usinée ou moulée d'épaisseur préférentiellement inférieure à 5 cm, encore plus préférentiellement 2 cm, et encore plus préférentiellement 1 cm. L'épaisseur de la pièce correspond à la plus grande dimension de la pièce selon l'axe de rotation du pignon 105, lorsque le dispositif 100 et le pignon 105 sont fixés au cadre.

Préférentiellement, l'extrémité d'un bras 119 du support de fixation comporte une butée 117. Dans les modes de réalisation représentés, la butée 117 présente préférentiellement une forme comportant deux extrémités circulaires jointes par une surface de raccordement courbée. La butée 117 comporte un méplat 120 configuré pour entrer en contact avec l'armature et limiter sa rotation.

Le support de fixation 115 et la butée 117 peuvent être formés d'une seule pièce. Préférentiellement, la butée 117 est une pièce distincte du support 115, fixé par des moyens de fixations pouvant être de tout type ordinairement utilisé. Préférentiellement, les moyens de fixation comportent au moins un orifice, préférentiellement deux, oblong 165 ou circulaire, la butée étant fixée par un boulon dans chaque orifice.

La butée 117 est proéminente par rapport au support de fixation 115.

Préférentiellement, la butée 117 est préférentiellement fixée à une bague intérieure d'un roulement, la bague extérieure dudit roulement étant monté sur la première roue dentée 125. Dans ces modes de réalisation, la bague intérieure du roulement est fixée à la butée 117, et au support de fixation 115 par les moyens de fixation. Par exemple, un boulon peut traverser successivement la butée 117, la bague intérieure du roulement et le support de fixation.

La première roue dentée 125 est de tout type ordinairement utilisé dans le métier de la mécanique de cycle. La première roue dentée 125 est fixée en roue libre, au moyen du roulement, par rapport au support de fixation selon un axe parallèle à l'axe de rotation du pignon 105 lorsque le dispositif 100 est monté sur un cadre de cycle 305. Préférentiellement, la première roue dentée 125 est positionnée du même côté du support de fixation 115 que le pignon 105. En d'autres termes, la surface médiane de la première roue dentée 125 est coplanaire à la surface médiane du pignon 105.

La première roue dentée 125 est en rotation autour d'un premier axe 130 parallèle aux axes de rotation, 510 et 110, de la couronne 505 et du pignon 105. La première roue dentée 125 est configurée pour que le cercle de tête 410 de la première roue dentée 125 soit tangent au cercle de tête 405 du pignon 105.

Le support de fixation comporte un moyen de réglage 165 de la position du premier axe 130 configuré pour que le cercle de tête 410 de la première roue dentée 125 soit tangent au cercle de tête 405 du pignon 105. En d'autres termes, le premier axe 130 est positionné pour qu'un point de contact entre le cercle de tête 410 de la première roue dentée 110 et le cercle de tête 405 du pignon 105 soit le point de la tangente 420 commune à ces deux cercles.

Dans les modes de réalisation dans lesquels, la bague intérieure du roulement est fixée à la butée 117, les moyens de fixation 165 correspondent au moyen de réglage, la position de l'axe du boulon étant adaptable dans le trou oblong, formant ainsi une liaison glissière ou pivot glissant selon l'axe du bras 119 du moyen de fixation auquel l'ensemble est fixé.

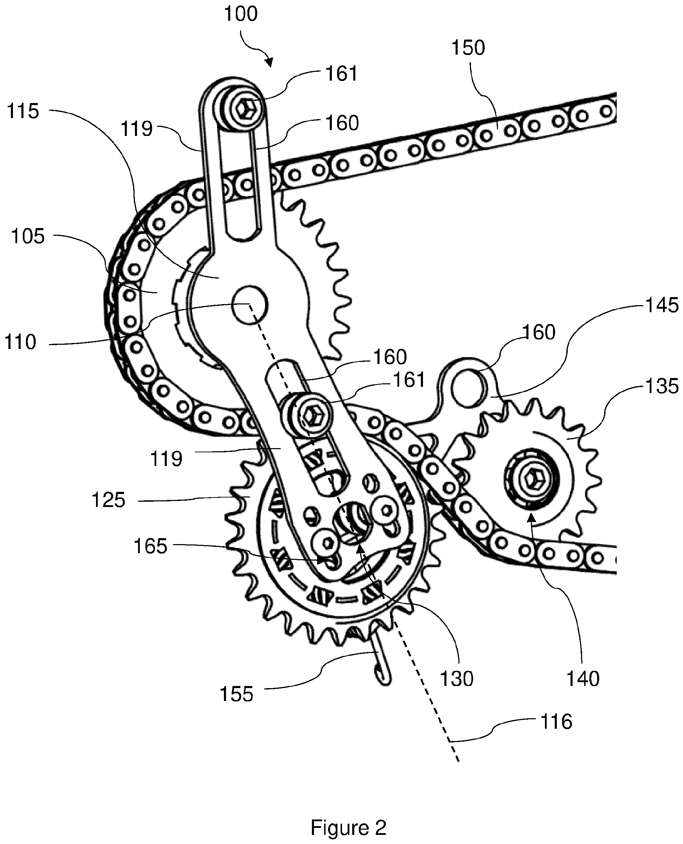

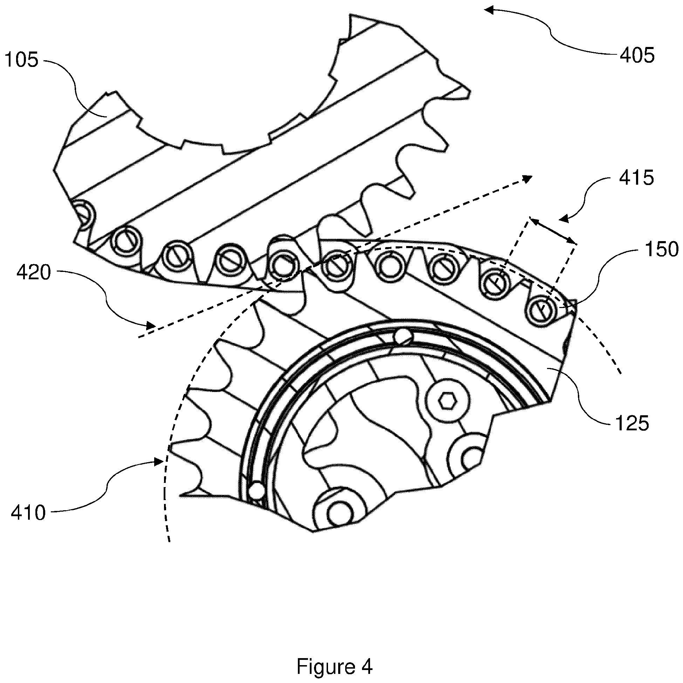

Dans des modes de réalisation, tels que ceux représentés sur les figures 2 et 4, le moyen de réglage 165 peut être une glissière ou une série d'au moins deux orifices distincts.

Dans des modes de réalisation (non présentés). Le moyen de réglage 165 se compose de deux séries d'au moins deux orifices. Préférentiellement, le support 115 de fixation peut comporter deux séries, de trois orifices distincts, symétriques par rapport à un axe 116. Le premier axe 130 peut comporter un moyen de fixation pour maintenir le premier axe 130 en position dans l'orifice dans lequel il est placé, c'est-à-dire pour maintenir la première roue dentée 125 en position. Un tel moyen de fixation peut être de tout type ordinairement utilisé dans le métier de la mécanique de cycle, de type vis-écrou par exemple.

Lorsque le dispositif est fixé au cadre 305 d'un cycle, le premier axe 130 de la première roue dentée 125 est positionné en dessous de l'axe 110 du pignon 105. Autrement dit, le positionnement de la première roue dentée 125 guide la chaîne 150 pour que la chaîne 150 soit au contact des dents du pignon 105. Autrement dit, la première roue dentée 125 est préférentiellement positionnée pour guider la chaîne 150 vers le pignon 105. On note ici que les dents de la première roue dentée 125 sont adaptées à l'entraxe de la chaîne 150. Les dents de la première roue dentée 125 s'engrènent avec la chaîne mais pas avec le pignon 105.

La configuration présentée ci-dessus permet d'augmenter le rendement de la transmission de puissance entre la chaîne 150 et le pignon 105. En effet, plus de maillons de chaîne s'engrènent avec le pignon 105.

Le mouvement en rotation de la première roue dentée 125 est transmis par l'intermédiaire de la chaîne 150. La première roue dentée 125 peut se positionner à l'intérieur ou à l'extérieur de la chaîne 150. Préférentiellement, la première roue dentée 125 est positionnée à l'extérieur de la chaîne 150. Autrement dit, la première roue dentée 125 tourne dans un sens opposé au sens de rotation du pignon 105 et de la couronne 505.

L'armature 145 est configurée pour positionner la deuxième roue dentée 135 de l'autre côté de la chaîne 150 par rapport à la première roue dentée 125. L'armature 145 est un solide comportant deux moyens de former des axes de rotation parallèles : un axe de rotation avec le support de fixation 115 d'une part et un axe de rotation de la deuxième roue dentée 135, d'autre part. L'entre-axe entre lesdits axes de rotation est supérieur ou égal à la somme du rayon du cercle de tête de la première roue dentée 125 et du rayon du cercle de tête de la deuxième roue dentée 135.

L'armature 145 est fixée par une liaison pivot selon un troisième axe au support de fixation 115. Le troisième axe est parallèle au premier et au deuxième axe, 130 et 140.

L'armature 145 comporte, d'une part, une forme dite « de rotation » 148 par rapport au support 115 et, d'autre part, une forme dite « d'accroche » 149 de la deuxième roue dentée 135. La forme de rotation 148 présente, par exemple, une forme de disque percé selon deux ouvertures distinctes. Une première ouverture 151 peut être un perçage débouchant formant la liaison pivot avec le support 115 de troisième axe, parallèle ou confondu au premier axe 130. Autrement dit, la première ouverture 151 peut être coaxiale au premier axe 130. Préférentiellement, la première ouverture 151 forme une liaison pivot entre l'armature 145 et un moyen de fixation de la butée 117au support 115. Préférentiellement, le moyen de fixation formant la liaison pivot est le moyen de fixation de la butée 117 au support 115 le plus éloigné du méplat 120.

Une deuxième ouverture 152 peut être un trou oblong formant un arc de cercle. Par exemple, cette deuxième ouverture 152 permet la rotation du support 115 en laissant possible le mouvement de rotation du moyen de fixation de la butée 117 au support 115.

Dans des variantes (non représentées), selon lesquelles la pièce de butée 117 présente un seul moyen de fixation au support 115, la forme de rotation 148 présente une forme de disque percé selon une unique ouverture. Cette unique ouverture peut être un perçage débouchant formant la liaison pivot avec le support 115 d'axe parallèle ou confondu au premier axe 130. Autrement dit, l'unique ouverture peut être coaxiale au premier axe 130. Par exemple, l'unique ouverture forme une liaison pivot entre l'armature 145 et le moyen de fixation de la pièce de butée 117 au support 115.

La deuxième roue dentée 135 est paramétrée en fonction de la chaîne utilisée. La surface interne de la deuxième roue dentée 135 peut être montée sur un roulement dont la bague intérieure est fixée à l'armature 145. Le roulement permet à la deuxième roue dentée 135 d'être en rotation libre autour du deuxième axe 140. Autrement dit, la deuxième roue dentée 135 est en rotation libre par rapport à l'armature 145.

Préférentiellement, la deuxième roue dentée 135 présente un diamètre inférieur à la première roue dentée 125. La surface médiane de la deuxième roue dentée 135 peut être coplanaire à la surface médiane du pignon 105. Autrement dit, la surface médiane de la deuxième roue dentée 135 est coplanaire à la surface médiane la première roue dentée 125. Ces modes de réalisation permettent d'éviter un déraillement de la chaîne.

Le mouvement en rotation de la deuxième roue dentée 135 est transmis par l'intermédiaire de la chaîne 150. La deuxième roue dentée 135 est positionnée à l'intérieur de la chaîne 150. Autrement dit, la deuxième roue dentée 135 tourne dans un sens identique au sens de rotation du pignon 105 et de la couronne 505.

La deuxième roue dentée 135 subit une tension mécanique par l'intermédiaire de la chaîne 150, entraînant une rotation de l'armature 145 autour du troisième axe 130 dans un sens horaire selon la vue de la figure 1.

La rotation de l'armature 145 par rapport au support 115 est limitée par le méplat 120 de la butée 117. L'armature 145 peut comporter un ergot ou une protubérance 146 pouvant être de forme quelconque. Dans des modes de réalisation, la protubérance 146 est une pièce mécanique solidaire à l'armature 145. Par exemple, une telle pièce mécanique est ergot ou une bague. La pièce mécanique peut être fixée par un moyen de fixation tel un système vis-écrou.

La protubérance 146 de l'armature 145 rentre en contact avec le méplat 120 de la butée 117 du support 115, limitant ainsi la rotation de l'armature 145.

L'armature 145 peut présenter des évidements, débouchants ou non, limitant la quantité de matériau utilisé pour former l'armature sans affecter les capacités de résistances aux efforts mécaniques entraînées par la force exercée au niveau du contact d'avec la butée 117 d'une part et au niveau du deuxième axe 140 d'autre part.

Préférentiellement, l'armature 145 peut être composée d'un matériau rigide tel du carbone, un matériau composite ou un alliage métallique, par exemple un acier, un acier inoxydable ou un alliage d'aluminium.

L'armature 145 est une pièce usinée ou moulée d'épaisseur préférentiellement inférieure à 5 cm, encore plus préférentiellement 2 cm, et encore plus préférentiellement 1 cm. L'épaisseur de la pièce correspond à la plus grande dimension de la pièce selon l'axe de rotation du pignon 105, lorsque le dispositif 100 et le pignon 105 sont fixés au cadre.

Dans des modes de réalisation, tels que celui représenté sur la figure 1, le tendeur 100 comporte un ressort 155 de compensation configuré pour maintenir l'armature 145, et plus particulièrement la protubérance 146, en contact avec la butée 120.

Le ressort 155 est un ressort en rotation est fixé entre un point de l'armature 145. Le ressort 155 est configuré pour éloigner la protubérance 146 du méplat 120 de la butée 117. Le ressort 155 peut être positionné autour du troisième axe 130. Le ressort 155 peut être placé entre la butée 120 et l'armature 145. Autrement dit, le ressort 155 est positionné sur les moyens de fixation de la butée 117 au support 115. Préférentiellement, le ressort 155 est enroulé sur les deux moyens de fixations de la butée 117 au support 115.

Le ressort 155 peut comporter une tige rigide exerçant une force sur une deuxième protubérance 147 présente sur l'armature 145. Autrement dit, la surface de l'armature 145 comporte une deuxième protubérance 147 pouvant être de forme quelconque. La deuxième protubérance 147 peut être une pièce mécanique solidaire à l'armature 145. Par exemple, une telle pièce mécanique est un ergot ou une bague. La pièce mécanique est fixée par un moyen de fixation pouvant être un système vis-écrou. La deuxième protubérance 147 est fixée sur la même face de l'armature que la première protubérance 146.

Dans des variantes (non représentées), le support 115 peut être formé de deux pièces en liaison glissière l'une par rapport à l'autre formant ainsi un support 115 télescopique. Préférentiellement, le support 115 possède des moyens de serrage 170, tels un système vis-écrou, sur les extrémités des deux pièces pour maintenir le support 115 en position sur le cadre 305.

Dans des modes de réalisation, tels que celui représenté sur la figure 1, l'armature 145 comporte au moins un moyen d'adaptation 160 de la position du deuxième axe 140. Le moyen d'adaptation 160 peut être similaire à ceux décrits précédemment.

Dans des variantes (non représentées), un tel moyen d'adaptation 160 peut être une liaison glissière entre le deuxième axe 140, sur lequel est montée la deuxième roue dentée 135, et l'armature 145. L'armature 145 présente, par exemple, un trou oblong dont le dimensionnement est adapté au passage du deuxième axe 140.

Dans des modes de réalisation (non représentés), au moins un moyen d'adaptation 160 comporte un coulisseau se translatant dans une coulisse, le coulisseau comportant des moyens de serrage 170 à la coulisse.

Le support 115 peut présenter des trous oblongs, formant des coulisses, préférentiellement positionnés au-dessus et en dessous de l'axe de rotation du pignon 105. Des coulisseaux, translatant dans ces coulisses, peuvent venir en appui de chaque côté extérieur au cadre 305, à proximité de l'axe de rotation du pignon 105. Ces deux appuis créés par exemple deux liaisons ponctuelles 306 entre les coulisseaux et le cadre 305. Dans des variantes (non représentées), les coulisseaux peuvent venir en appui de chaque côté intérieur au cadre 305.

Les coulisseaux peuvent posséder un moyen de serrage 170 pour bloquer la translation. Par exemple, de tels moyens de serrage 170 sont des systèmes vis-écrou ou des pinces.

Dans des modes de réalisation, tels que ceux représentés sur les figures 1 et 2, au moins un moyen d'adaptation 160 comporte au moins deux orifices distincts définissant des positions de fixation du cadre 305 au cycle ou du deuxième axe 140.

Un tel moyen d'adaptation 160 peut être une série d'au moins deux orifices distincts dont les dimensions sont adaptées aux dimensions d'un roulement formant le deuxième axe 140. Préférentiellement, l'armature 145 possède 3 orifices. Par exemple, les centres des orifices peuvent être placés sur une trajectoire traçant un cercle dont le centre est le troisième axe 130.

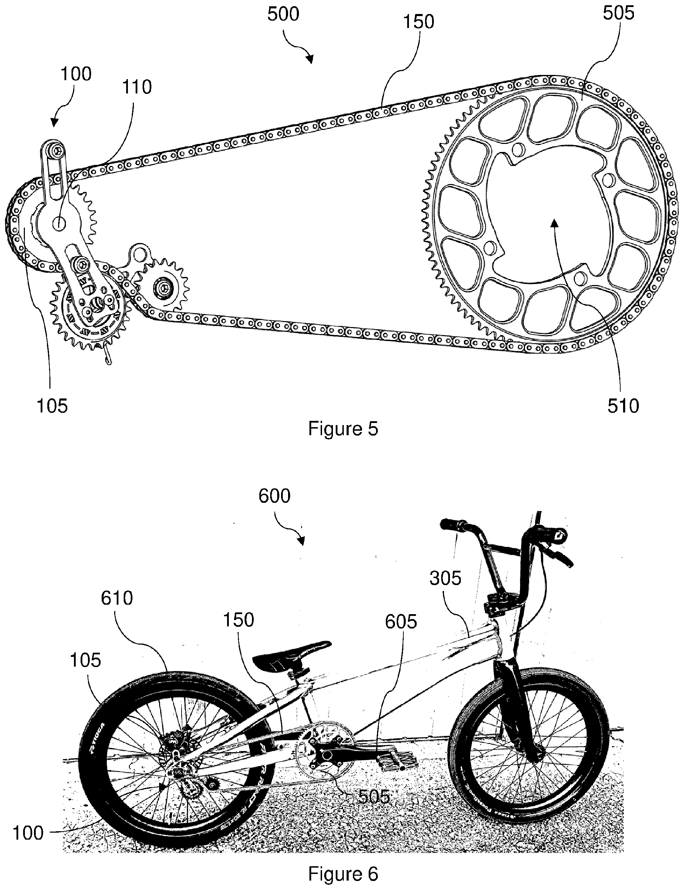

On observe, sur la figure 5, schématiquement, un mode de réalisation particulier d'un kit 500 pour cycle comportant un tendeur 100 et au moins un élément parmi un pignon 105, une couronne 505 et/ou une chaîne 150.

Dans des modes de réalisation, tels que celui représenté sur la figure 4, la chaîne 150 présente un pas 415 compris entre 5,5 mm et 8,5 mm préférentiellement entre 6 mm à 7,99 mm.

Par exemple, la première roue dentée 125 et la deuxième roue dentée 135 présentent des caractéristiques adaptées à une chaîne 150 avec un pas 415 compris entre 5,5 mm et 8,5 mm. Préférentiellement, la première roue dentée 125 et la deuxième roue dentée 135 présentent des caractéristiques adaptées à une chaîne 150 avec un pas 415 compris entre 6 mm à 7,99 mm, préférentiellement compris entre 6mm et 7mm et encore plus préférentiellement de 6mm.

On observe, sur la figure 6, schématiquement, un mode de réalisation particulier d'un cycle 600 comportant un tendeur 100. Le cycle 600 comportant un cadre 305 présentant une couronne 505 fixée à un pédalier 605 et un pignon 105 fixé à une roue 610, la couronne 505 et le pignon 105 présentent des axes de rotation par rapport au cadre 305 parallèles, la chaîne 150 transmettant la force en rotation exercée sur la couronne 505 au moyen du pédalier 605 au pignon 105 un tendeur 100 tel que décrit ci-dessus est fixé au cadre 305 autour du pignon 105.

Le cycle comporte également une roue avant montée sur un guidon et une selle de manières connues de l'homme du métier.

Préférentiellement, le cycle est de type « BMX » (acronyme de « Bicycle Motorcross » en anglais).

Lorsque l'utilisateur actionne le pédalier 605, la chaîne 150 entraîne en rotation, sans transmission de puissance, la première et la deuxième roue dentée, 125 et 135. La transmission de puissance est effectuée au niveau du pignon 105 qui permet de propulser le cycle 600 au moyen de la roue 610. Étant donné le positionnement de la chaîne entre la deuxième roue dentée 135 et la première roue dentée 125, la chaîne exerce une force vers le haut sur la deuxième roue dentée 135. Cette force entraîne l'armature 145 en rotation vers la butée. La résistance de la butée permet d'exercer l'effort de mise sous tension de la chaîne.

### PRÉSENTATION DE L'INVENTION

La présente invention vise à remédier à tout ou partie de ces inconvénients.

À cet effet, selon un premier aspect, la présente invention vise un tendeur de chaîne pour cycle qui comporte un cadre présentant une couronne fixée à un pédalier et un pignon fixé à une roue, la couronne et le pignon présentent des axes de rotation par rapport au cadre parallèles, la chaîne transmettant la force en rotation exercée sur la couronne au moyen du pédalier au pignon. Le tendeur comporte :
- une première roue dentée dite « de guidage », montée en roue libre par rapport au support, entraînée en rotation par la chaîne autour d'un premier axe parallèle aux axes de rotation de la couronne et du pignon,
- un support de fixation au cadre qui comporte un moyen de réglage de la position du premier axe configuré pour que la position du premier axe soit telle que le cercle de tête de la première roue dentée soit tangent au cercle de tête du pignon.

Grâce à ces dispositions, il est possible d'adapter facilement la position de la première roue dentée du tendeur par rapport au pignon du cycle. L'utilisateur peut changer la position du premier axe par rapport au support. Ainsi, le tendeur est adaptable à tout diamètre de pignon. De plus, le nombre de points de contact entre la chaîne et le pignon est augmenté ce qui permet une meilleure transmission de puissance. Enfin, cette position permet un engrènement complet et invariable du pignon avec la chaîne.

Dans des modes de réalisation, le support de fixation au cadre comporte une butée, le tendeur objet de la présente invention comportant, de plus
- une deuxième roue dentée dite de « mise sous tension », entraînée en rotation par la chaîne autour d'un deuxième axe parallèle au premier axe,
- une armature de la deuxième roue dentée, la deuxième roue dentée étant montée en roue libre par rapport à l'armature, l'armature formant une liaison pivot avec le support d'axe parallèle ou confondu au premier axe, la rotation de l'armature, sous l'effet d'une tension exercée par la chaîne sur la roue de mise sous tension, par rapport au support étant limité par la butée.

Un tel tendeur permet de tendre la chaîne sans créer de force contraignante lorsque l'utilisateur commence à pédaler. En effet, lors du démarrage et en cours de pédalage, l'action de l'utilisateur sur le pédalier entraîne la couronne, la chaîne et le pignon en rotation. La première roue dentée et la deuxième roue dentée rentrent également en rotation, entraînées par la chaîne. La deuxième roue dentée entraîne alors en rotation l'armature jusqu'à être bloquée par la butée du support, qui reste fixe. Une fois l'armature bloquée en rotation, la deuxième roue dentée créée une force de pression sur la chaîne permettant de la maintenir tendue lors de l'utilisation du cycle en minimisant les efforts sur la chaîne. De plus, quel que soit le type de chaîne utilisé, la présente invention permet de maintenir une chaîne tendue, en rattrapant les jeux existants pour effectuer la jonction entre les maillons d'une chaîne.

Dans des modes de réalisation, le tendeur comporte un ressort de compensation configuré pour maintenir l'armature en contact avec la butée.

Ces modes de réalisations permettent de minimiser l'effet des jeux créés lors de l'usure de la chaîne. En effet, le ressort est monté permettant ainsi de compenser une éventuelle perte de tension due aux jeux.

Dans des modes de réalisation, l'armature comporte au moins un moyen d'adaptation de la position du deuxième axe.

Ces modes de réalisations permettent de régler la position de la deuxième roue dentée pour être adaptable à toute longueur de chaîne.

Dans des modes de réalisation, le support comporte au moins un moyen d'adaptation de la position de fixation au cadre du cycle.

Ces modes de réalisations permettent au tendeur de chaîne d'être adaptable à toute forme de cadre de cycle et de régler la position du tendeur.

Dans des modes de réalisation, au moins un moyen d'adaptation comporte un coulisseau se translatant dans une coulisse, le coulisseau comportant des moyens de serrage à la coulisse.

Ces modes de réalisations permettent d'adapter facilement la position d'une première pièce du tendeur par rapport à une deuxième pièce du tendeur ou du cycle. En effet, l'utilisateur translate la première pièce, liée au coulisseau, dans une coulisse, liée à la deuxième pièce, jusqu'à une position souhaitée. Ensuite, l'utilisateur fixe cette position grâce au moyen de serrage présent sur le coulisseau par rapport à la coulisse.

Dans des modes de réalisation, au moins un moyen d'adaptation comporte au moins deux orifices distincts définissant des positions de fixation du cadre au cycle ou du deuxième axe.

Ces modes de réalisations permettent d'adapter facilement la position d'une première pièce du tendeur par rapport à une deuxième pièce du tendeur ou du cycle. Notamment, l'utilisateur place le premier axe dans un des orifices présents sur le support, permettant ainsi de régler en position la première roue dentée qui a pour centre de rotation le premier axe.

Selon un deuxième aspect, la présente invention vise un kit pour cycle comportant un tendeur et au moins un élément parmi un pignon, une couronne et/ou une chaîne.

Les avantages, buts et caractéristiques particulières du kit objet de la présente invention sont identiques à ceux du tendeur objet de la présente invention, ils ne sont pas rappelés ici

Dans des modes de réalisation, la chaîne présente un pas compris entre 5,5 mm et 8,5 mm préférentiellement entre 6 mm à 7,99 mm.

Les inventeurs ont remarqué qu'une telle chaîne permet une meilleure transmission de puissance pour un effort similaire. Ainsi, pour le même effort, l'utilisateur peut aller plus vite.

Selon un troisième aspect, la présente invention vise un cycle comportant un tendeur.

Les avantages, buts et caractéristiques particulières du cycle objet de la présente invention sont identiques à ceux du tendeur et du kit objets de la présente invention, ils ne sont pas rappelés ici

## Revendications

1. Tendeur (100) de chaîne pour cycle, le cycle (600) comportant un cadre (305) présentant une couronne (505) fixée à un pédalier (605) et un pignon (105) fixé à une roue (610), la couronne (505) et le pignon (105) présentent des axes de rotation (110, 510, 515) par rapport au cadre (305) parallèles, la chaîne (150) transmettant la force en rotation exercée sur la couronne (505) au moyen du pédalier (605) au pignon (105), le tendeur (100) étant **caractérisé en ce qu'**il comporte :
- une première roue dentée (125) dite « de guidage », montée en roue libre par rapport au support (115), entraînée en rotation par la chaîne (115) autour d'un premier axe (130) parallèle aux axes de rotation (110, 510, 515) de la couronne (505) et du pignon (105),
- un support (115) de fixation au cadre (305), qui comporte un moyen de réglage (165) de la position du premier axe (130) configuré pour que la position du premier axe (130) soit telle que le cercle de tête de la première roue dentée (410) soit tangent au cercle de tête du pignon (405).

2. Tendeur selon la revendication 1, dans lequel le support de fixation (115) au cadre comporte une butée (120), le tendeur comportant, de plus :
- une deuxième roue dentée (135) dite de « mise sous tension », entraînée en rotation par la chaîne (150) autour d'un deuxième axe (140) parallèle au premier axe (130),
- une armature (145) de la deuxième roue dentée (135), la deuxième roue dentée (135) étant montée en roue libre par rapport à l'armature (145), l'armature (145) formant une liaison pivot avec le support (115) d'axe parallèle ou confondu au premier axe (130), la rotation de l'armature (145), sous l'effet d'une tension exercée par la chaîne (150) sur la roue (135) de mise sous tension, par rapport au support (115) étant limité par la butée (120).

3. Tendeur selon la revendication 2, qui comporte, de plus, un ressort (155) de compensation configuré pour maintenir l'armature (145) en contact avec la butée (120).

4. Tendeur selon l'une des revendications 2 ou 3, dans lequel l'armature (145) comporte au moins un moyen d'adaptation (160) de la position du deuxième axe (140).

5. Tendeur selon l'une des revendications 1 à 4, dans lequel le support (115) comporte au moins un moyen d'adaptation (160) de la position de fixation au cadre (305) du cycle.

6. Tendeur (100) selon l'une des revendications 4 ou 5, dans lequel au moins un moyen d'adaptation (160) comporte un coulisseau se translatant dans une coulisse, le coulisseau comportant des moyens de serrage (170) à la coulisse.

7. Tendeur (100) selon l'une des revendications 4 ou 5, dans lequel au moins un moyen d'adaptation (160) comporte au moins deux orifices distincts définissant des positions de fixation au cadre (305) du cycle ou du deuxième axe (140).

8. Kit (500) pour cycle comportant un tendeur selon l'une des revendications 1 à 7 et au moins un élément parmi un pignon (105), une couronne (505) et/ou une chaîne (150).

9. Kit (500) selon la revendication 8, dans lequel la chaîne (150) présente un pas (415) compris entre 5,5 mm et 8,5 mm préférentiellement entre 6 mm à 7,99 mm.

10. Cycle (600) qui comporte un tendeur (100) selon l'une des revendications 1 à 7.
